# EUROPEAN PATENT APPLICATION

(11) **EP 1 788 808 A1**
(43) Date of publication of application: **23.05.2007**
(21) Application number: 05025486.1
(22) Date of filing: 22.11.2005
(51) Int. Cl.: H04N 7/14, H04M 1/02, G03B 17/04

(54) **Electronic communication device**

(71) Applicant: Asmobile Communication Inc., ZhongZheng Taipei (TW)
(72) Inventor: Chang, Yu-Chuan, ZhongZheng District Taipei (TW); Chan, Mei-Lin, ZhongZheng District Taipei (TW); Chung, Chung-Jen, ZhongZheng District Taipei (TW); Chang, Hung-Chun, ZhongZheng District Taipei (TW)
(74) Representative: Schaeberle, Steffen

(57) **Abstract**

An electronic communication device is provided, which includes a scene shooting portion (11), a communication portion (12) and a hinge portion. The scene shooting portion includes a lens (16). The communication portion includes a display unit (20). The hinge portion is for connecting the scene shooting portion and the communication portion, so that the scene shooting portion can rotate with respect to the communication portion.

## Description

This application incorporates by reference of Taiwan application Serial No. 93139678, filed December 20, 2004, the subject matter of which is incorporated herein by reference.

### BACKGROUND OF THE INVENTION

### Field of the Invention

The invention relates in general to an electronic communication device, and more particularly to an electronic communication device whose scene shooting portion and communication portion can rotate with respect to each other.

### Description of the Related Art

Living in today's society where science and technology advance and change rapidly, mobile phone has become an indispensable tool to modern people in their everyday life. In addition, the mobile phone with photo shooting function enables the user to make phone calls and take photos at the same time.

In a conventional mobile phone with photo shooting function, the display unit and the keypad are normally disposed on the front side of the housing, and the lens is disposed on the back of the housing, so that the user can view the scene from the display unit when taken a photo. However, when the user is taking pictures of oneself, the user has to face the back of the housing on which a lens is disposed, thus can not view his or her own image at the display unit disposed on the front side of the housing. Therefore, the user would find it inconvenient and difficult to find a good location and angle when taking a photo. Thus, the practicality of the mobile phone with photo shooting function is largely reduced.

### SUMMARY OF THE INVENTION

It is therefore the object of the invention to provide an electronic communication device whose design of using a hinge portion to connect the communication portion and the scene shooting portion allows the user to adjust the of rotation angle of the communication portion and the scene shooting portion, so that the user can preview the scene when the user is taking pictures of oneself or take a photo. Besides, the linking device of the invention connects the first fixing element and the second fixing element, not only allows the first fixing element to fix the communication portion and the scene shooting portion when the lens is covered by the second fixing element, but also allows the first fixing element not to fix the communication portion and the scene shooting portion when the lens is not covered by the second fixing element, largely increasing the practicality of the electronic communication device.

In one aspect of the invention, an electronic communication device is provided, which includes a scene shooting portion, a communication portion and a hinge portion. The scene shooting portion includes a lens. The communication portion includes a display unit. The hinge portion is connected with the scene shooting portion and the communication portion so that the scene shooting portion can rotate with respect to the communication portion.

In another aspect of the invention, an electronic communication device including a scene shooting portion, a communication portion, a hinge portion and a fixing mechanism is provided. The scene shooting portion has a lens, and the communication portion has a display unit. The hinge portion is connected the scene shooting portion and the communication portion for the communication portion rotates with respect to the scene shooting portion. The fixing mechanism is moveably disposed between the communication portion and the scene shooting portion to fix the scene shooting portion and the communication portion, so that the communication portion and the scene shooting portion are fixed and can not rotate with respect to each other.

In still another aspect of the invention, a linking device including a first fixing element, a second fixing element, a connection element and an elastomer is provided. The connection element is pivotally connected to the first fixing element and the second fixing element and swings along a pivotal point according to the movement of the first fixing element or the movement of the second fixing element to drive the second fixing element or the first fixing element to move. One end of the elastomer is connected to the first fixing element, and another end of the elastomer is connected to a fixed point. The elastomer is for providing an elastic force, so that the first fixing element or the second fixing element is moveable only when receiving an external force larger than the elastic force.

The connection element drives the second fixing element to move when the user moves the first fixing element, the first fixing element is an active element, and the second fixing element is a passive element. To the contrary, the connection element drives the first fixing element to move when the user moves the second fixing element, the second fixing element is an active element, and the first fixing element is a passive element. The first fixing element, for example, can be used to fix the communication portion and the scene shooting portion, and the second fixing element can be a lens cover for instance.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1A is a front view 3-D diagram of an electronic communication device according a first embodiment of the invention;

FIG. 1B is a back view 3-D diagram of the electronic communication device according the first embodiment of the invention;

FIG. 1C is a partial circuit diagram of the electronic communication device according the first embodiment of the invention;

FIG. 1D is an enlarged 3-D diagram of a hinge portion and a cable line of FIG. 1A;

FIG. 1E is a 3-D diagram showing a scene shooting portion and a communication portion of FIG. 1A rotate 90° with respect to each other;

FIG. 1F is a 3-D diagram showing the scene shooting portion and the communication portion of FIG. 1A rotate 180° with respect to each other;

FIG. 2A is a side view of an electronic communication device according a second embodiment of the invention;

FIG. 2B is a back view of the electronic communication device according the second embodiment of the invention;

FIG. 2C is a diagram showing the status of the electronic communication device of FIG. 2A when a first fixing element is inserted into a first aperture;

FIG. 2D is a diagram showing the status of the electronic communication device of FIG. 2B when the first fixing element is inserted into the first aperture;

FIG. 3A is a side view of an electronic communication device according a third embodiment of the invention;

FIG. 3B is a back view of the electronic communication device according a third embodiment of the invention;

FIG. 3C is a diagram showing the status of the electronic communication device of FIG. 3A when a first fixing element is inserted into a second aperture;

FIG. 3D is a diagram showing the status of the electronic communication device of FIG. 3B when the first fixing element is inserted into the second aperture;

FIG. 4A is a back view of an electronic communication device according a fourth embodiment of the invention;

FIG. 4B is a diagram of a linking device, a lens, a photo sensing unit, a cable line, and a fourth lateral side of a first housing of the electronic communication device of FIG. 4A viewed from a second surface of a first housing;

FIG. 4C is a diagram of a linking device, a lens, a photo sensing unit, a cable line, and a fourth lateral side of a first housing of the electronic communication device of FIG. 4B viewed from a first surface of a first housing;

FIG. 5A is a back view of the electronic communication device of FIG. 4A showing the status when the lens is not covered by a second fixing element;

FIG. 5B is a 3-D diagram of the linking device of FIG. 4B showing the status when the lens is not covered by the second fixing element; and

FIG. 5C is a diagram of the linking device of FIG. 4C showing the status when the lens is not covered by the second fixing element.

### DETAILED DESCRIPTION OF THE INVENTION

### First Embodiment

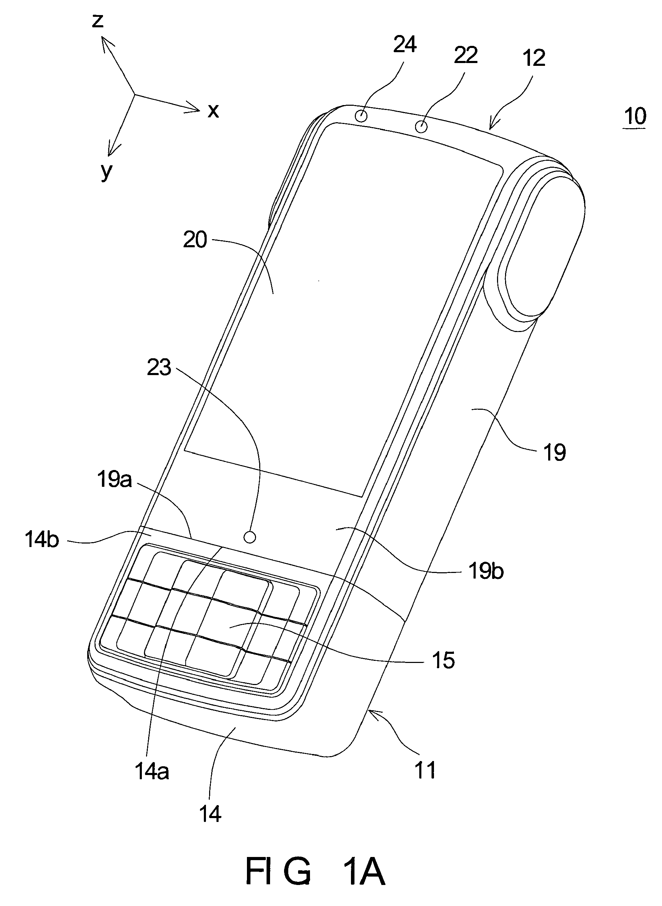

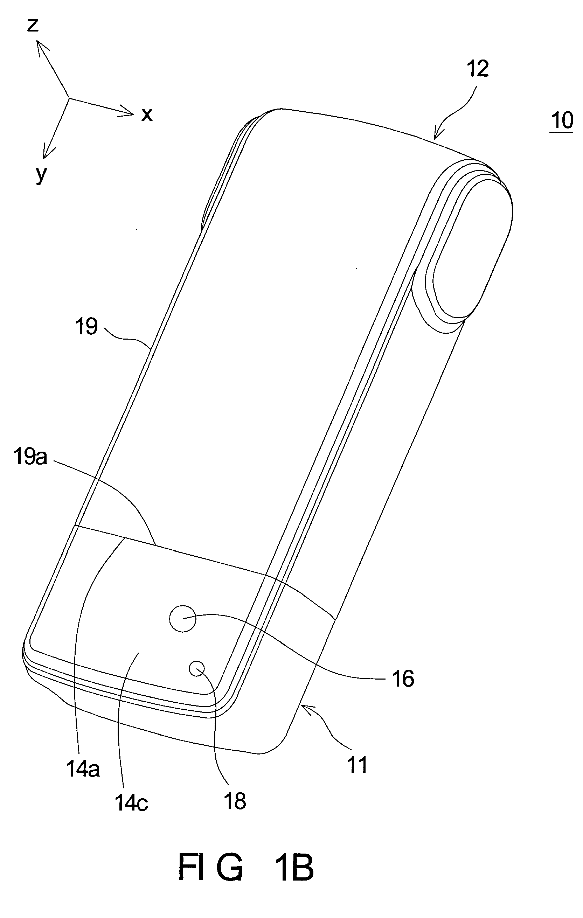

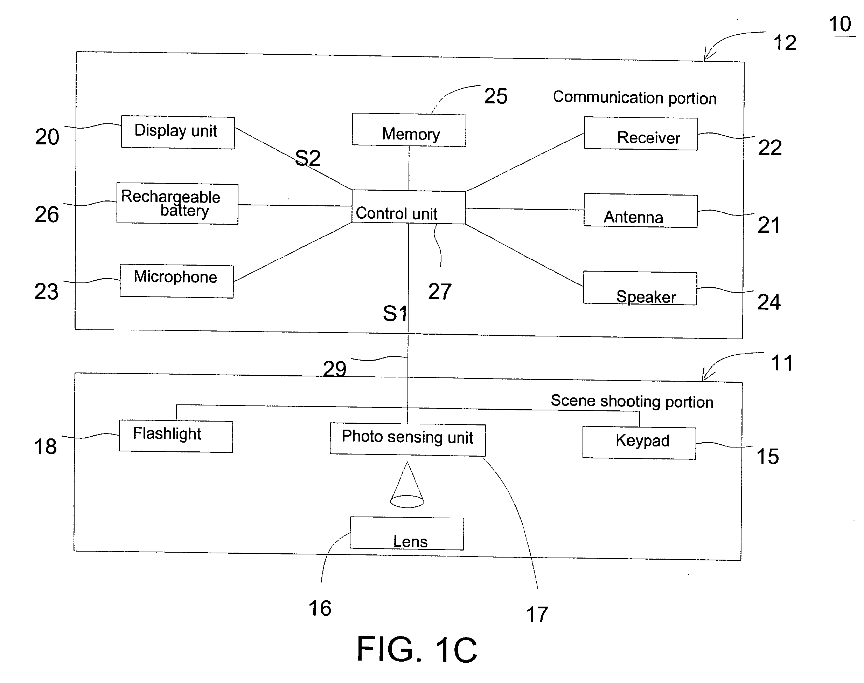

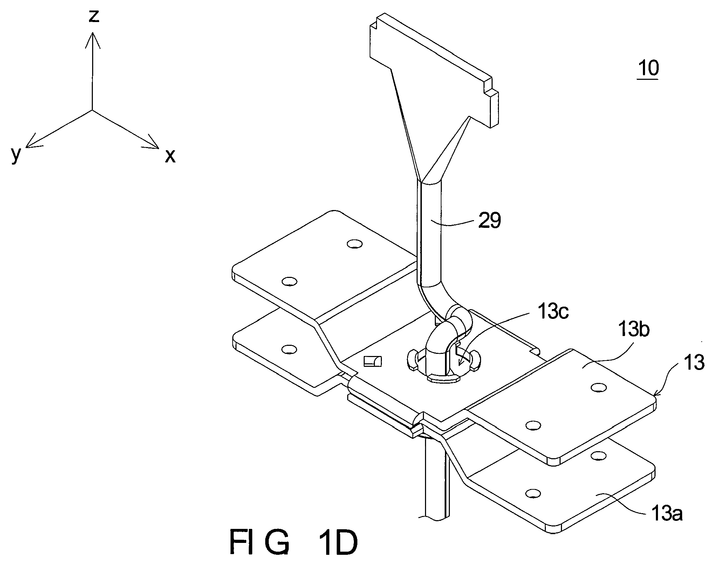

Referring to FIGS. 1A~1D, in the present embodiment, an electronic communication device 10 includes a scene shooting portion 11, a communication portion 12 and a hinge portion 13. The scene shooting portion 11 and the communication portion 12 respectively have a lens 16 and a display unit 20. The hinge portion 13 is for connecting the scene shooting portion 12 and the communication portion 13, so that the scene shooting portion 12 can rotate with respect to the communication portion 13. In the present embodiment, the electronic communication device 10, which includes any portable electronic device having at least communication and photo shooting function, is exemplified by a 3-D structure of a mobile phone.

The scene shooting portion 11 further includes a first housing 14, a keypad 15 and a photo sensing unit 17. The first housing 14 has a first lateral side 14a, and a first surface 14b and a second surface 14c opposite to each other. The first lateral side 14a is for connecting the first surface 14b and the second surface 14c. Besides, the normal direction of the first lateral side 14a can be the -y-direction for instance. The keypad 15 is disposed on the first surface 14b for a user to operate and input instructions with. The keypad 15 includes a number key, a function key, a direction key, and so on. The user can switch the operating mode of the electronic communication device 10 between a communication operating mode and an image shooting mode by the keypad 15. The lens 16 is disposed on the second surface 14c and opposite to the keypad 15. The photo sensing unit 17 is disposed within the first housing 14 and optically connected to the lens 16. The photo sensing unit 17 fetches the image of the scene through the lens 16. Besides, the photo sensing unit 17 includes a complementary metal oxide semiconductor (CMOS) photo sensor or a charge coupled device (CCD).

The communication portion 12 further includes a second housing 19, an antenna 21 and a control unit 27. The control unit 27 is electrically connected to the display unit 20 and the antenna 21. The second housing 19 has a second lateral side 19a and a third surface 19b. The second lateral side 19a faces the first lateral side 14a, and the third surface 19b can face the same direction such as the z-direction with the first surface 14a. The display unit 20 is disposed on the third surface 19b for displaying the communication frame or the image fetched by the photo sensing unit 17. The display unit 20 can be a liquid crystal display (LCD panel) or an organic light emitting diode (OLED) display panel. The antenna 21 can be disposed within the second housing 19 or on any one surface of the second housing 19 to enable the communication with the external.

The hinge portion 13 connects the first housing 14 and the second housing 19 with the first lateral side 14a facing the second lateral side 19a, so that the communication portion 13 and the scene shooting portion 12 can be rotated with respect to each other using the normal line of the first lateral side 14a, which extending along the -y-direction, as the axis of rotation to adjust the position of the lens 16 with respect to the display unit 20 and achieve a multi-position and multi-angle shooting.

In the present embodiment, the scene shooting portion 11 further includes a flashlight 18 disposed on the second surface 14c for providing illumination to the environment of the scene when the photo sensing unit 17 is fetching the image of the scene. Besides, the communication portion 12 further includes a receiver 22, a microphone 23, a speaker 24, a memory 25 and a rechargeable battery 26. The receiver 22, the microphone 23, the speaker 24, the memory 25 and the rechargeable battery 26 are all electrically connected to the control unit 27. The receiver 22 and the microphone 23 can be disposed on the third surface 19b for receiving the caller's and the user's voice respectively when the user is using the electronic communication device 10. The receiver 22 is positioned at one side of the display unit 20, and the microphone 23 is positioned at another side of the display unit 20. The microphone 23 is closer to the second lateral side 19a than the receiver 22. The speaker 24 can be disposed on any one surface of the second housing 19 to transmit the voice. For example, the speaker 24 is disposed on the third surface 19b and adjacent to the receiver 22. The memory 25 is disposed within the second housing 19 for storing the basic information of the electronic communication device 10. The rechargeable battery 26 can be plugged onto and unplugged from the surface of the second housing 19 opposite to the third surface 19b to be disposed within the second housing 19 for providing the electronic communication device 10 with necessary power.

The hinge portion 13 has a first connecting piece 13a and a second connecting piece 13b which can rotate with respect to each other. The first connecting piece 13a and the second connecting piece 13b are connected to the first housing 14 and the second housing 19. The electronic communication device 10 further includes a cable line 29. The cable line 29 can penetrate the through hole 13c of the hinge portion 13 to be disposed within the first housing 14 and the second housing 19. One end of the cable line 29 is electrically connected to the photo sensing unit 17, the flashlight 18 and the keypad 15. Another end of the cable line 29 is electrically connected to the control unit 27. Besides, the photo sensing unit 17 fetches the image of the scene and then outputs a first image signal S1 accordingly. The control unit 27 receives the first image signal S1, and then generates a second image signal S2 accordingly. The control unit 27 controls the display unit 20 to display an image corresponding to the second image signal S2.

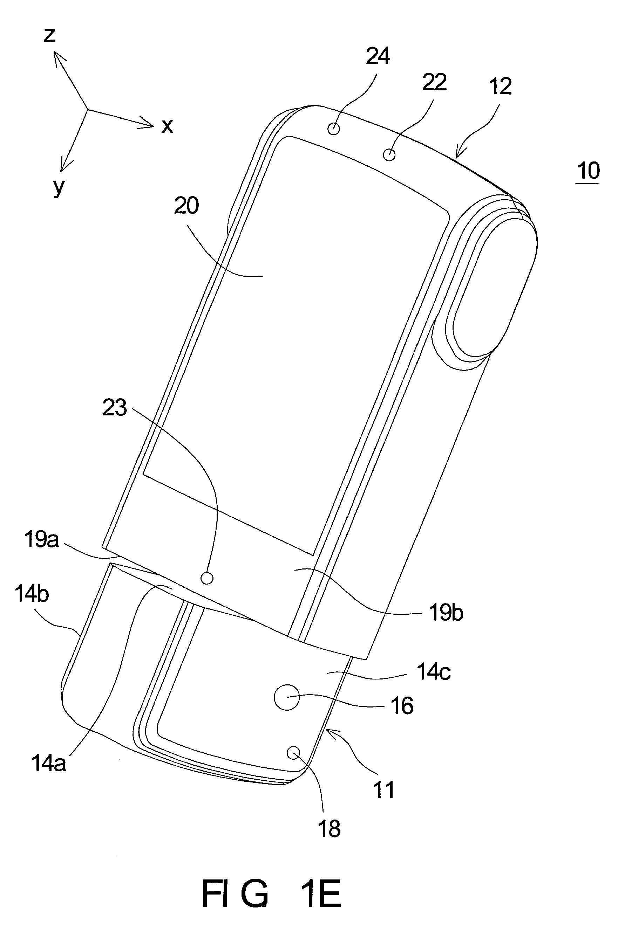

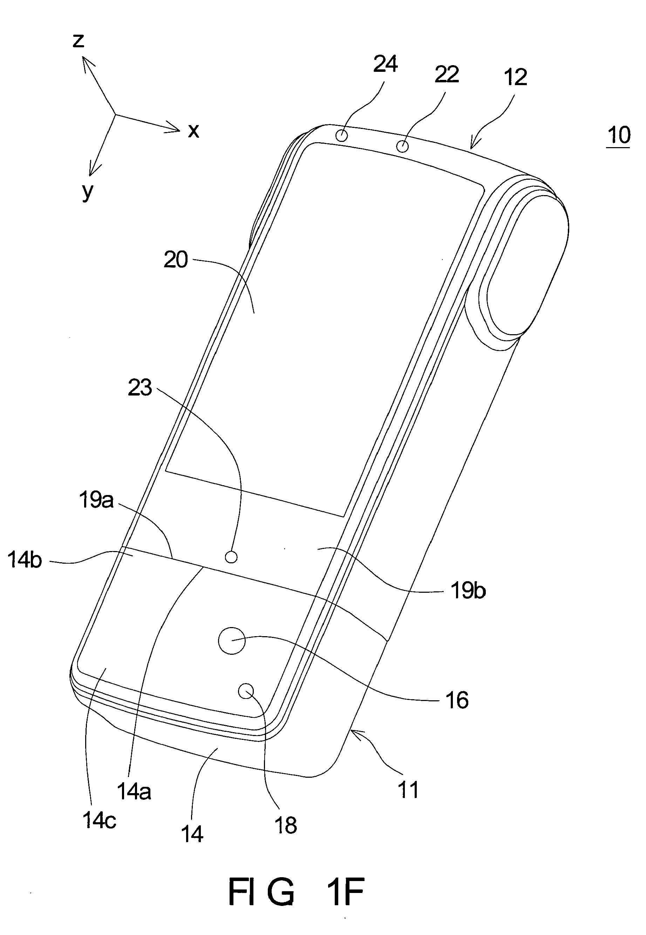

As shown in FIG. 1 E, when the communication portion 13 and the scene shooting portion 12 are rotated with respect to each other, the normal line of the second surface 14c and that of the third surface 19b form a first contained angle. When the second surface 14c and the third surface 19b respectively face the x-direction and the z-direction, the first contained angle can be 90° for instance. As shown in FIG. 1 F, when the communication portion 13 and the scene shooting portion 12 continue be rotated with respect to each other, the second surface 14c and the third surface 19b can face the same direction, such as the z-direction. Thus, the user can adjust the rotation angle between the communication portion 13 and the scene shooting portion 12, so that the first surface 14b having the lens 16 disposed thereon and the third surface 19b having the display unit 20 disposed thereon can face the same direction, two tilting directions or two opposite directions, unshackling the restriction imposed on the conventional mobile phone that the lens and the display unit have to face either the same direction or two opposite directions. Consequently, the user is able to preview the image from the display unit 20 when taking pictures of oneself or take a photo, largely increasing the practicality of the electronic communication device 10.

Anyone who is skilled in the technology of the invention will understand that the scope of technology of the invention is not limited thereto. For example, the hinge portion 13 can be a rotary hinge providing the retained torsion force and the pause point of the fixed angle when the communication portion 13 and the scene shooting portion 12 are rotated with respect to each other.

Besides, when the electronic communication device 10 is in the image fetching mode, the control unit 27 can use the antenna 21 to detect whether any call is coming. When using the antenna 21 to detect the incoming calls, the control unit 27 controls the display unit 20 to display an incoming call select frame including an "answer" option and a "reject" option for the user to choose whether to answer or to reject the incoming call.

While the circuit structure disclosed above is only an embodiment of the electronic communication device of the invention, other circuit structures having both communication function and image fetching function are also applicable to the electronic communication device of the invention. For example, the electronic communication device 10 can further includes a signal processing unit disposed within the first housing 14. The signal processing unit electrically connected to the control unit 27 through the cable line 29. The signal processing unit is for receiving the first image signal S1 and outputting the second image signal S2 to the control unit 27 accordingly.

Besides, the control unit 27 can be disposed within the first housing 14 to be electrically connected to the photo sensing unit 17, the keypad 15 and the flashlight 18. The control unit 27 is electrically connected to the display unit 20, the antenna 21, the receiver 22, the microphone 23, the speaker 24, the memory 25 and the rechargeable battery 2 through the cable line 30.

### Second Embodiment

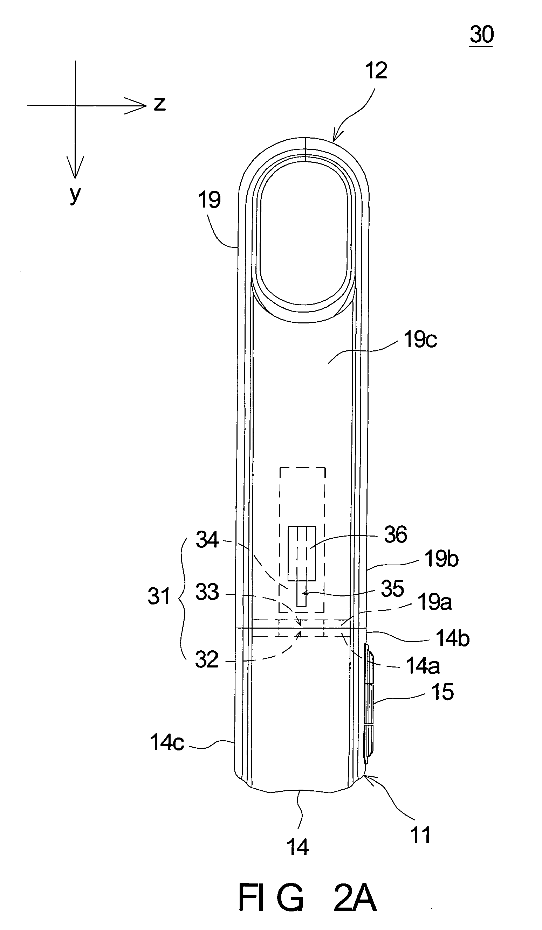

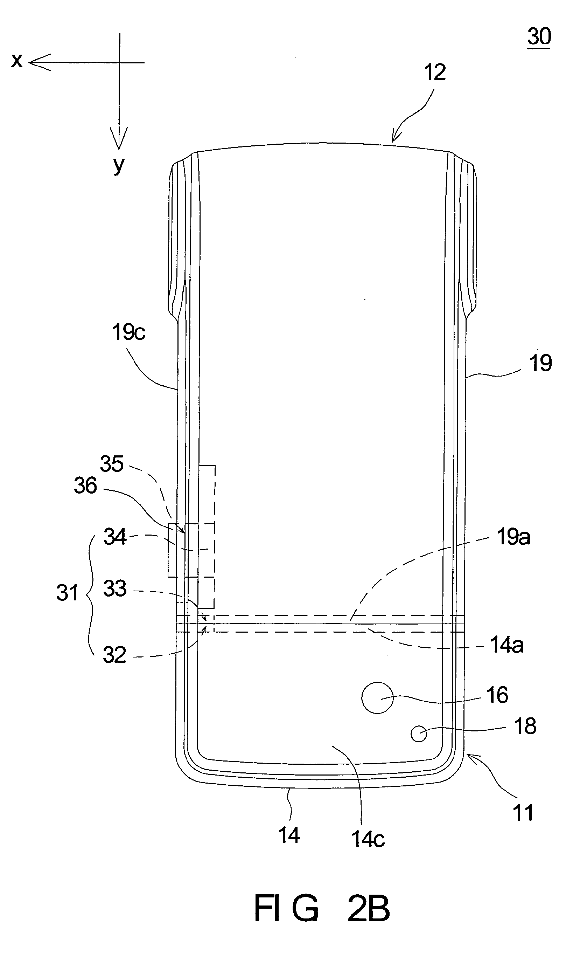

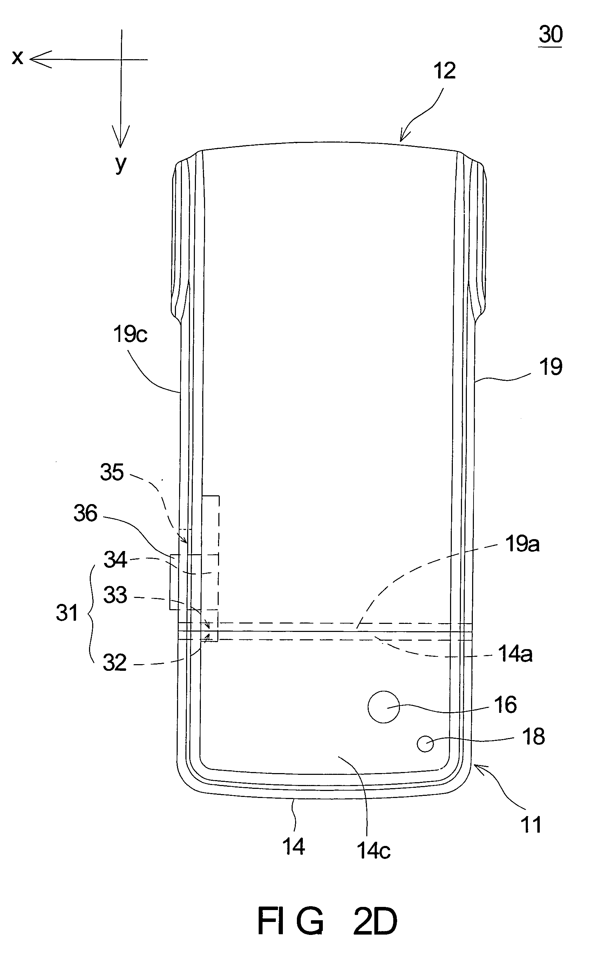

Referring to FIGS. 2A~2B at the same time, a side view and a back view of an electronic communication device according to a second embodiment of the invention are shown. The electronic communication device 30 of present embodiment differs with the electronic communication device 10 of the first embodiment in a fixing mechanism 31. The fixing mechanism 31 is moveably disposed between the scene shooting portion 11 and the communication portion 12 to fix the scene shooting portion 11 and the communication portion 12, so that the scene shooting portion 11 and the communication portion 12 can not rotate with respect to each other. As for the other components which are the same, the same labels are used, and are not repeated here. In the present embodiment, the fixing mechanism 31 includes a first aperture 32, a second aperture 33 and a first fixing element 34.

In FIGS. 2A~2B, the first lateral side 14a has a first aperture 32, and the second lateral side 19a has a second aperture 33. The second aperture 33 corresponds to the first aperture 31 when the first surface 14b faces the same direction, the z-direction for instance, with the third surface 19b, the first fixing element 34 can leave and enter the second aperture 33 to be received within the second housing 19 and move reciprocally between a fixed position and a non-fixed position. For example, the first fixing element 34 can move reciprocally along the y-direction to be disposed on a third lateral side 19c of the second housing 19. The third lateral side 19c has a slot 35, the first fixing element 34 is connected to a force receiver 36 projected from the slot 35, so that the first fixing element 34 and the force receiver 35 can be embedded within the slot 35 and slide within the slot 35. Thus, the user can move the first fixing element 34 reciprocally along the y-direction outside the electronic communication device 30 through the force receiver 36.

As shown in FIGS. 2A~2B, when the first fixing element 34 is received within the second housing 19, the first fixing element 34 is positioned at the non-fixed position, so that the first housing 14 and the second housing 19 can rotate with respect to each other. That is, the scene shooting portion 11 and the communication portion 12 can be rotated with respect to each other.

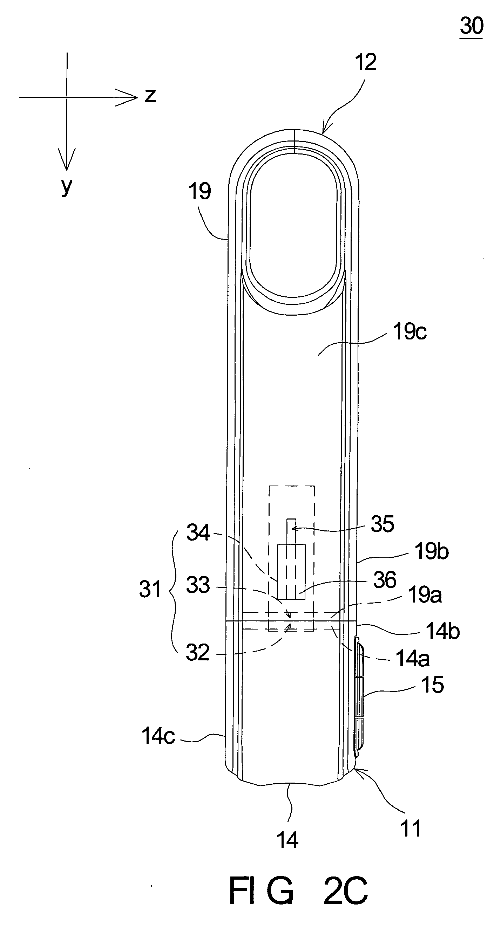

As shown in FIGS. 2C∼2D, when the user moves the force receiver 35 along the y-direction when the first surface 14b faces the same direction, such as the z-direction for instance, with the third surface 19b, the first fixing element 34 is inserted into the first aperture 32 through the second aperture 33, and the first fixing element 34 is positioned at the fixed position. Meanwhile, the first housing 14 and the second housing 19 are fixed. That is, the scene shooting portion 11 and the communication portion 12 are fixed.

The first fixing element 34 of the present embodiment is for fixing the communication portion 12 and the scene shooting portion 11, so that the scene shooting portion 11 and the communication portion 12 would not rotate with respect to each other when the user is using the electronic communication device 30. Furthermore, the user can conveniently receive the electronic communication device 30 at the pocket or bag for instance without worrying the scene shooting portion 11 and the communication portion 12 might rotate with respect to each other.

### Third Embodiment

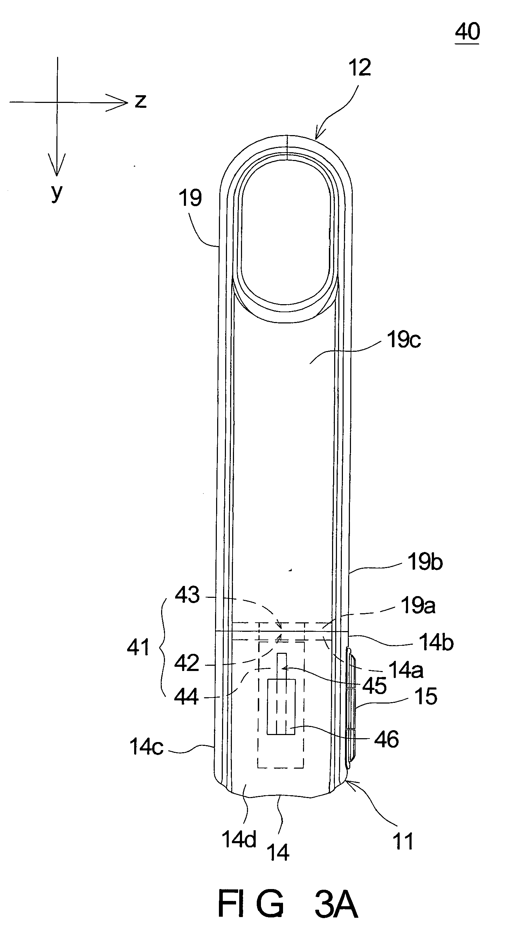

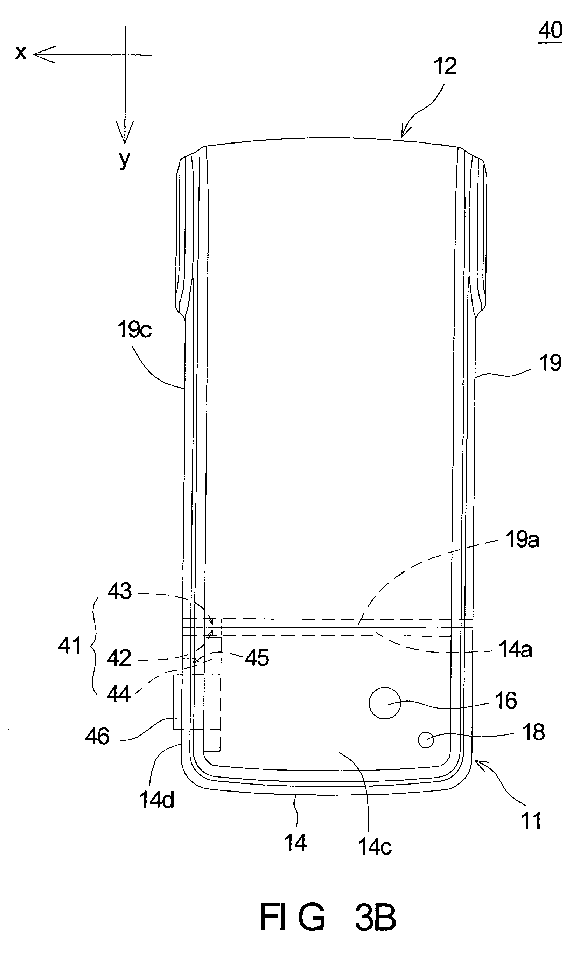

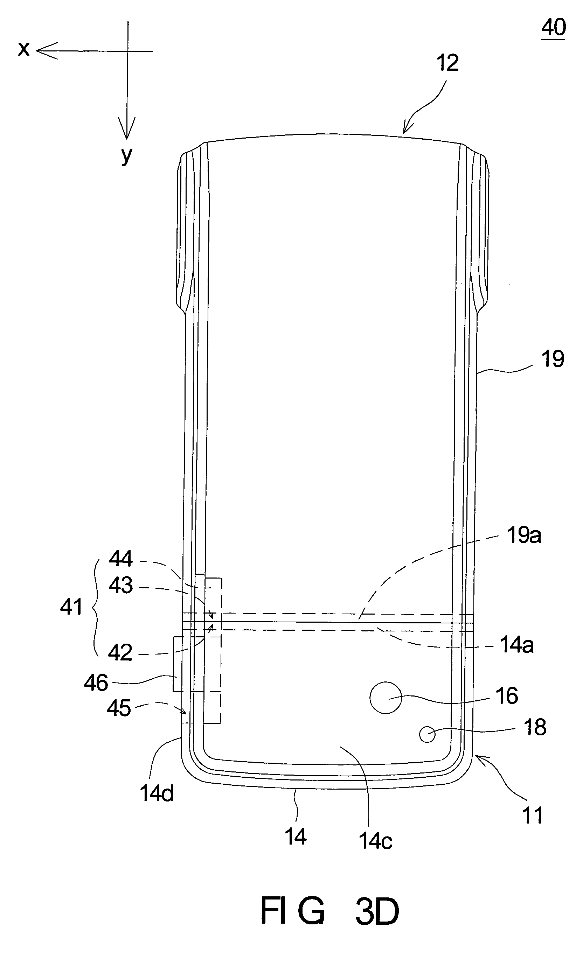

Referring to FIGS. 3A~3B at the same time, a side view and a back view of an electronic communication device according a third embodiment of the invention are shown. FIG. 3B is a back view of the electronic communication device according a third embodiment of the invention. The electronic communication device 40 of the present embodiment differs with the electronic communication device 10 of the first embodiment in a fixing mechanism 41. The fixing mechanism 41 is moveably disposed between the scene shooting portion 11 and the communication portion 12 to fix the scene shooting portion 11 and the communication portion 12, so that the scene shooting portion 11 and the communication portion 12 can not rotate with respect to each other. As for the other components which are the same, the same labels are used, and are not repeated here. In the present embodiment, the fixing mechanism 41 includes a first aperture 42, a second aperture 43 and a first fixing element 44.

In FIGS. 3A∼3B, the first lateral side 14a has a first aperture 42, and the second lateral side 19a has a second aperture 43. The second aperture 43 corresponds to the first aperture 41 when the first surface 14b faces the same direction, such as the z-direction for instance, with the third surface 19b. The first fixing element 44 can leave and enter the first aperture 42 to be received within the first housing 14 and move reciprocally between a fixed position and a non-fixed position. For example, the first fixing element 44 can move reciprocally along the -y-direction to be disposed on a fourth lateral side 14d of the first housing 14. The fourth lateral side 14d has a slot 45. The first fixing element 44 is connected to a force receiver 46 projected from the slot 45, so that the first fixing element 44 and the force receiver 46 can be embedded and slide within the slot 45. Thus, the user can move the first fixing element 44 reciprocally along the -y-direction outside the electronic communication device 40 through the force receiver 46.

As shown in FIGS. 3A~3B, when the first fixing element 44 is received within the first housing 14, the first fixing element 44 is positioned at the non-fixed position, so that the first housing 14 and the second housing 19 can rotate with respect to each other. That is, the scene shooting portion 11 and the communication portion 12 can be rotated with respect to each other.

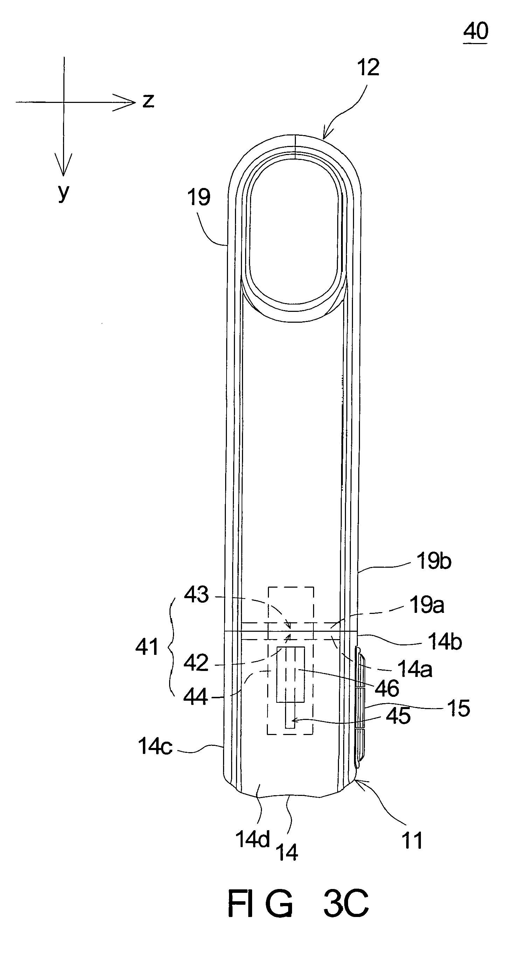

As shown in FIGS. 3C∼3D, when the user moves the force receiver 45 along the -y-direction when the first surface 14b faces the same direction, such as the z-direction for instance, with the third surface 19b, the first fixing element 44 is inserted into the second aperture 43 through the first aperture 42, the first fixing element 44 is positioned at the fixed position. Meanwhile, the first housing 14 and the second housing 19 are fixed. That is, the scene shooting portion 11 and the communication portion 12 are fixed.

### Fourth Embodiment

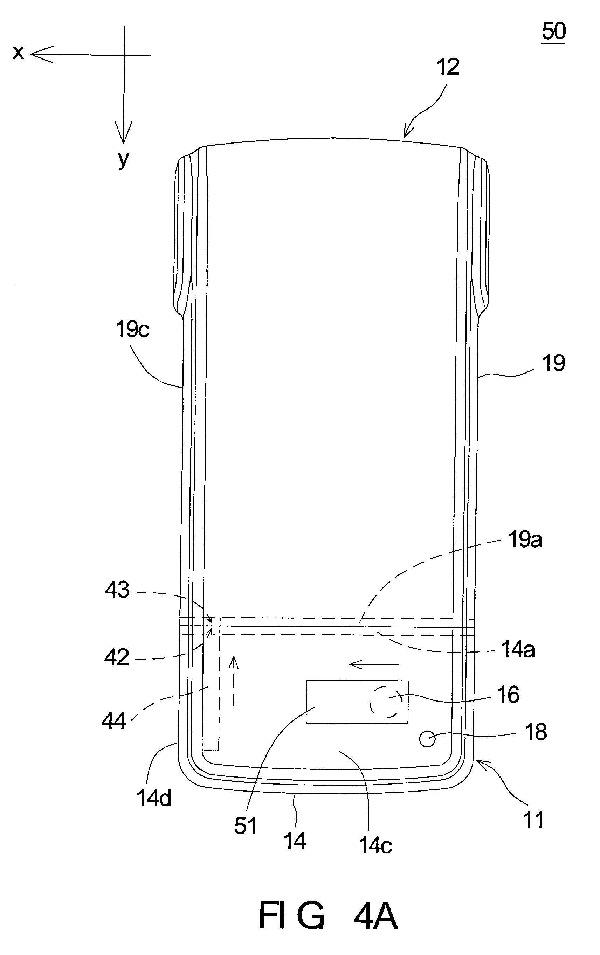

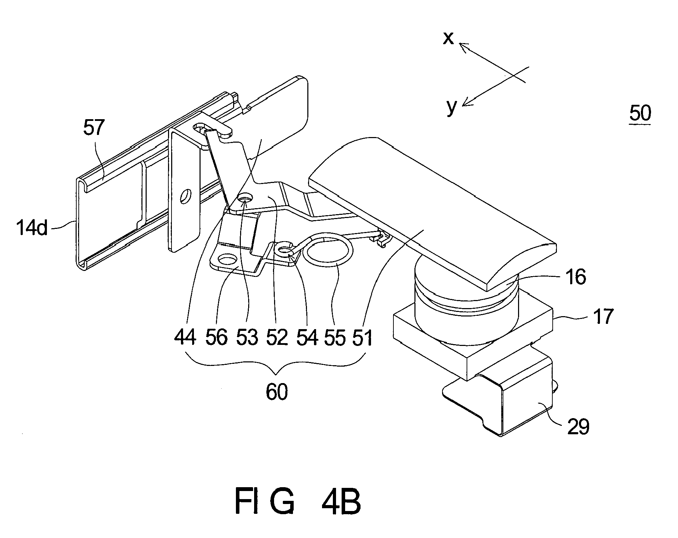

Referring to FIGS. 4A∼4C, the electronic communication device 50 of the present embodiment differs with the electronic communication device 40 of the third embodiment in a linking device 60. As for the other components which are the same, the same labels are used, and are not repeated here.

In FIGSS. 4A∼4C, the linking device 60 includes a first fixing element 44, a second fixing element 51 and a connection element 52. The first fixing element 44 can move reciprocally along the -y-direction between a fixed position and a non-fixed position, and can slide along a guide slot 57 disposed on an inner wall of the fourth lateral side 14d to be inserted into the second aperture 42 or received within the first housing 14. The second fixing element 51 is disposed on the second surface 14c, and can move reciprocally along the x-direction between an opening position and a closed position. The second fixing element 51 can be positioned at the opening position, for example, when not covering the lens 16, or positioned at the closed position, for example, when covering the lens 16. The second fixing element 51 can be exemplified by a lens cover here. However, the second fixing element 51 can refer to other moveable component and do not necessarily be limited to the lens cover. The connection element 52 is pivotally to the first fixing element 44 and the second fixing element 51 to be disposed within the first housing 14 and swing along a pivotal point 53 of the linking device 60 according to the movement of the first fixing element 44 or the second fixing element 51 to drive the second fixing element 51 or the first fixing element 41 to move.

In the present embodiment, the second fixing element 51 is projected from the third surface 14c for the user to move and drive the first fixing element 44 to move. Therefore, in the present embodiment, the electronic communication device 50 can do without the design of the slot 45 disposed on the fourth lateral side 14d of the third embodiment and the force receiver 46 projected from the fourth lateral side.

As shown in FIGS. 4A∼4C, when the second fixing element 51 is positioned at the closed position and covers the lens 16, the first fixing element 44 is inserted into the second aperture 42, so that the first housing 14 and the second housing 19 are fixed. That is, the scene shooting portion 11 and the communication portion 12 are fixed.

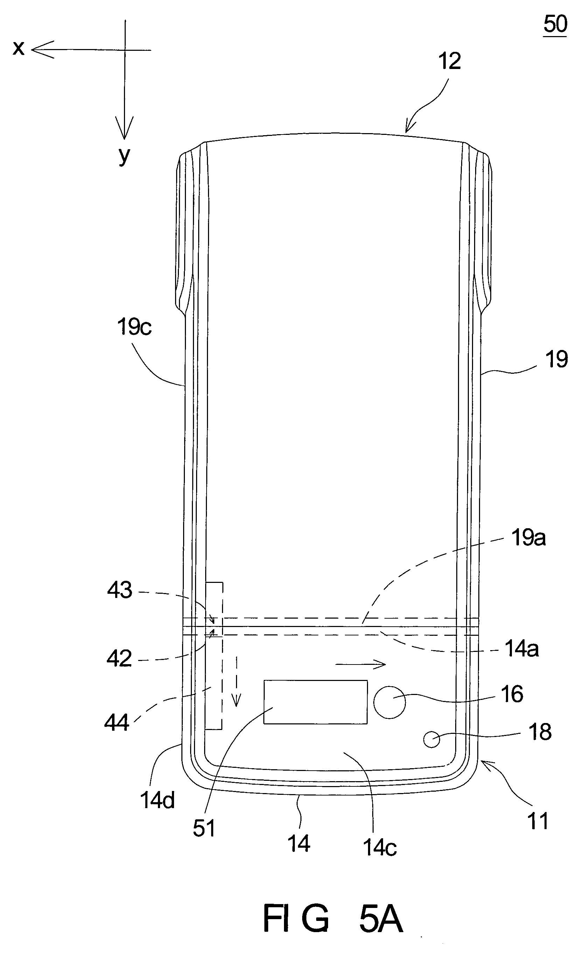

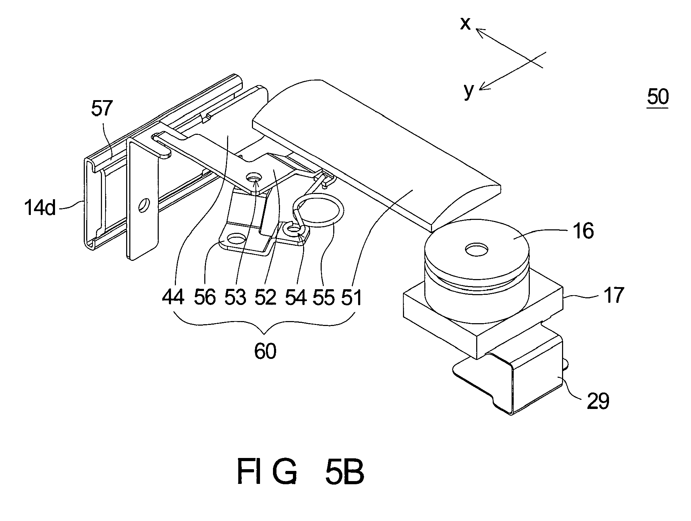

As shown in FIGS. 5A∼5C, when the second fixing element 51 is moved to the opening position from the closed position along the x-direction, the lens 16 would not be covered by the second fixing element 51. The first fixing element 44 would be moved to the non-fixed position from the fixed position by the connection element 52, so that the first housing 14 and the second housing 19 can rotate with respect to each other. That is, the scene shooting portion 11 and the communication portion 12 can be rotated with respect to each other.

When the second fixing element 51 is moved to the closed position from the opening position along -x direction, the lens 16 would be covered by the second fixing element 51, and the first fixing element 44 would be moved to the fixed position from the non-fixed position by the connection element 52, so that the first housing 14 and the second housing 19 are fixed and can not be rotated with respect to each other. That is, the scene shooting portion 11 and the communication portion 12 are fixed and can not be rotated with respect to each other as shown in FIGS. 4A∼4C.

Anyone who is skilled in the technology of the invention will understand that the scope of protection of the invention is not limited thereto. For example, the moving direction of the first fixing element 44 and that of the second fixing element 51 form a contained angle, which can be 90° for instance. The connection element 52 is an elbow structure, and the bending of the elbow structure is pivotally connected to the pivotal point 53.

The linking device 60 further includes an elastomer 55 whose two ends are correspondingly connected to the second fixing element 51 and a fixed point 54 of the linking device 60 to be disposed within the first housing 14 to provide an elastic force when the second fixing element 51 are respectively at the opening position and the closed position, so that the second fixing element 51 is moveable only when receiving an external force larger than the elastic force. On one hand, the second fixing element 51 would not move due to unintentional friction, gravity or vibration. On the other hand, the second fixing element 51 would slide naturally before the end of the course of movement is reached in a manner Semi-Auto closed and opened. Besides, the elastomer 55 can be a torsional spring.

Moreover, the linking device 60 further includes a positioning element 56 disposed within the first housing 14 to provide the pivotal point 53 and the fixed point 54 disclosed above. The positioning element 56 can be an elbow structure whose bending is also fixed within the first housing 14.

In the present embodiment, the linking device 60 further includes a detecting unit 61. The detecting unit 61 is for detecting one of the first fixing element 44, the second fixing element 51 and the connection element 52 when the second fixing element 51 is positioned at the opening position and outputting a detecting signal to the control unit of the electronic communication device 50 accordingly , for example the connection element 52 is detected. Or, the detecting unit 61 is touched by one of the first fixing element 44, the second fixing element 51 and the connection element 52 when the second fixing element 51 is positioned at the opening position, and outputting the detecting signal to the control unit of the electronic communication device 50 accordingly, for example the detecting unit 61 is touched by the connection element 52.

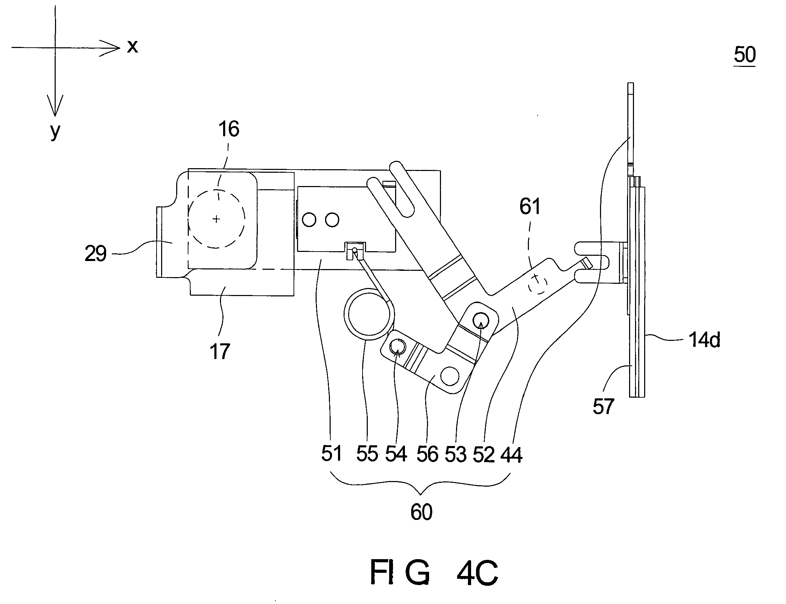

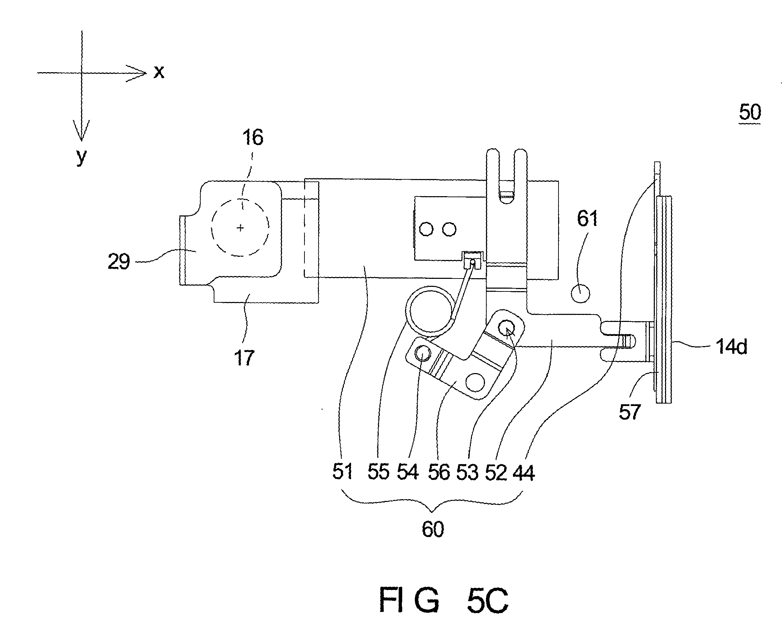

As shown in FIG. 4C, if the detecting signal is received by the control unit, the scene shooting portion 11 and the communication portion 12 can be rotated with respect to each other, and the operating mode of the electronic communication device 50 is set to be an image fetching mode by the control unit. Meanwhile, the user can use the electronic communication device to shoot the scene, so that the photo sensing unit 17 can fetch the image of the scene through the lens 16. As shown in FIG. 5C, if the detecting signal is not received by the control unit, the scene shooting portion 11 and the communication portion 12 are fixed, and the operating mode of the electronic communication device 50 is set to be a communication operating mode by the control unit. Meanwhile, the user has to operate with the keypad of the electronic communication device 50 in order to switch the operating mode of the electronic communication device 50 from the communication operating mode to image fetching mode.

Besides, the detecting unit can also detect one of the first fixing element 44, the second fixing element 51 and the connection element 52 when the second fixing element 51 is positioned at the closed position and output a detecting signal to the control unit of the electronic communication device 50 accordingly, for example the connection element 52 is detected by the detecting unit. If the detecting signal is received by the control unit, the scene shooting portion 11 and the communication portion 12 are fixed, and the operating mode of the electronic communication device 50 is set to be a communication operating mode by the control unit. If the detecting signal is not received by the control unit, the scene shooting portion 11 and the communication portion 12 can be rotated with respect to each other, and the operating mode of the electronic communication device 50 is to be an image fetching mode by the control unit. In the present embodiment, the second fixing element is not limited to the lens cover, and can refer to other components as well.

In other embodiments, the second fixing element 51 does not necessarily to be projected from the second surface 14c. For example, the first fixing element 44 can be projected from the fourth lateral side 14d for the user to move and drive the second fixing element 51 to move. As disclosed in the third embodiment, the user can move the first fixing element 44 reciprocally along the -y-direction outside the electronic communication device 50 through the force receiver 46. According to the above disclosure, in the design of moving the second fixing element 44 to drive the second fixing element 51, the linking device 60 further includes an elastomer for connecting the first fixing element and a fixed point. The elastomer can be a torsional spring for instance. On one hand, the first fixing element 44 would not move due to unintentional friction, gravity or vibration. On the other hand, the first fixing element 44 would slide naturally before the end of the course of movement is reached in a manner half closed and half opened. Besides, the linking device 60 further includes a positioning element for providing the fixed point and the pivotal point, and the elastomer can be a torsional spring.

In the design of moving the second fixing element 44 to drive the second fixing element 51, the linking device 60 further includes a detecting unit. The detecting unit is for detecting one of the first fixing element 44, the second fixing element 51 and the connection element 52 when the second fixing element 51 is positioned at the opening position and outputting a detecting signal to the control unit of the electronic communication device 50 accordingly. Meanwhile, the control unit determines the operating mode of the electronic communication device 50 to be an image fetching mode if the detecting signal is received by the control unit, and determines the operating mode of the electronic communication device 50 to be a communication operating mode if the detecting signal is not received by the control unit.

The detecting unit can also detect one of the first fixing element 44, the second fixing element 51 and the connection element 52 when the second fixing element 51 is positioned at the closed position and output a detecting signal to the control unit of the electronic communication device 50 accordingly. Meanwhile, the control unit determines the operating mode of electronic communication device 50 as an image fetching mode if the detecting signal is not received by the control unit, and determines the operating mode of electronic communication device 50 as a communication operating mode if the detecting signal is received by the control unit.

According to the above disclosure, when the user moves the first fixing element 44 so that the connection element 52 drives the second fixing element 51 to move, the first fixing element 44 is an active element, and the second fixing element 51 is a passive element. Meanwhile, the elastomer can be connected to the first fixing element 44 or the second fixing element 51. To the contrary, when the user moves the second fixing element 51 so that the connection element 52 drives the first fixing element 44 to move, the second fixing element 51 is an active element, and the first fixing element 44 is a passive element. Meanwhile, the elastomer can be connected to the first fixing element 44 or the second fixing element 51.

The electronic communication device disclosed in above embodiment of the invention uses a hinge portion to connect the communication portion and the scene shooting portion, allowing the user to adjust the of rotation angle of the communication portion and the scene shooting portion, so that the user can preview the scene when the user is taking pictures of oneself or take a photo. Besides, the linking device of the present embodiment connects the first fixing element and the second fixing element, not only allows the first fixing element to fix the communication portion and the scene shooting portion when the lens is covered by the second fixing element, but also allows the first fixing element not to fix the communication portion and the scene shooting portion when the lens is not covered by the second fixing element, largely increasing the practicality of the electronic communication device. Furthermore, the present embodiment sets electronic communication device as a communication operating mode or an image fetching mode when the lens is or is not covered by the second fixing element, so that the user can conveniently use the electronic communication device to take a photo of the scene by moving the second fixing element to the opening position. Moreover, the first fixing element is for fixing the communication portion and the scene shooting portion, so that the scene shooting portion will not rotate with respect to the communication portion when the user is using the electronic communication device. In addition, the electronic communication device is handy and portable, and when received at a pocket or bag, the rotation between the scene shooting portion and the communication portion would not occur.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An electronic communication device, comprising:
a scene shooting portion having a lens;
a communication portion having a display unit; and
a hinge portion for connecting the scene shooting portion and the communication portion, so that the scene shooting portion rotates with respect to the communication portion.

2. The electronic communication device according to claim 1, wherein the scene shooting portion further has a keypad, the keypad and the lens are disposed at two opposite surfaces of the scene shooting portion.

3. An electronic communication device, comprising:
a scene shooting portion having a lens;
a communication portion having a display unit;
a hinge portion for connecting the scene shooting portion and the communication portion, so that the scene shooting portion rotates with respect to the communication portion; and
a fixing mechanism moveably disposed with respect to the scene shooting portion and the communication portion to fix the scene shooting portion and the communication portion, so that the communication portion and the scene shooting portion are fixed and can not rotate with respect to each other.

4. The electronic communication device according to claim 3, wherein the scene shooting portion comprises a first aperture, the communication portion comprises a second aperture, and the first fixing mechanism comprises a first fixing element that can leave and enter the second aperture and move reciprocally between a fixed position and a non-fixed position;
when the first fixing element is inserted into the first aperture corresponding to the second aperture, the first fixing element is positioned at the fixed position, so that the scene shooting portion and the communication portion are fixed;
when the first fixing element is received within the communication portion, the first fixing element is positioned at the non-fixed position, so that the scene shooting portion and the communication portion can rotate with respect to each other.

5. The electronic communication device according to claim 3, wherein the fixing mechanism comprises a first aperture, a second aperture and a first fixing element, the scene shooting portion comprises the first aperture, the communication portion comprises the second aperture, the first fixing element can leave and enter the first aperture to be received within the scene shooting portion and move reciprocally between a fixed position and a non-fixed position;
when the first fixing element is inserted within the second aperture corresponding to the first aperture, the first fixing element is positioned at the fixed position, so that the scene shooting portion and the communication portion are fixed;
when the first fixing element is received within the scene shooting portion, the first fixing element is positioned at the non-fixed position, so that the scene shooting portion rotates with respect to the communication portion.

6. The electronic communication device according to claim 5, wherein the lens being disposed on a surface of the scene shooting portion, and wherein the electronic communication device further comprises:
a second fixing element, which is moveable reciprocally between an opening position and a closed position, wherein the second fixing element does not cover the lens at the opening position, the second fixing element covers the lens at the closed position; and
a connection element, which is pivotally connected to the first fixing element and the second fixing element and swings along a pivotal point according to the movement of the first fixing element to drive the second fixing element to move;
when the second fixing element is moved to the closed position from the opening position, the lens would be covered, and the first fixing element would be moved to the fixed position from the non-fixed position by the driving element;
when the second fixing element is moved to the opening position from the closed position, the lens would not be covered, and the first fixing element would be moved to the non-fixed position from the fixed position by the driving element.

7. The electronic communication device according to claim 6, wherein the connection element is an elbow structure and the bending of the elbow structure is pivotally connected to the pivotal point.

8. The electronic communication device according to claim 6, further comprising:
an elastomer whose two ends are correspondingly connected to the second fixing element and a fixed point of the scene shooting portion to provide an elastic force when the second fixing element is at the opening position and the closed position respectively, so that the second fixing element is moveable only when receiving an external force larger than the elastic force.

9. The electronic communication device according to claim 8, wherein the elastomer is a torsional spring.

10. The electronic communication device according to claim 8, further comprising:
a positioning element disposed within the scene shooting portion for providing the pivotal point and the fixed point.

11. The electronic communication device according to claim 6, wherein the moving direction of the first fixing element and the moving direction of the second fixing element form a contained angle.

12. The electronic communication device according to claim 11, wherein the contained angle is 90°.

13. The electronic communication device according to claim 5, wherein the lens being disposed on a surface of the scene shooting portion, and wherein the electronic communication device further comprises:
a second fixing element, which is moveable reciprocally between an opening position and a closed position to be disposed on the surface, the second fixing element does not cover the lens at the opening position, the second fixing element covers the lens at the closed position; and
a connection element, which is pivotally connected to the first fixing element and the second fixing element to be disposed within the scene shooting portion and swings along a pivotal point according to the movement of the first fixing element to drive the second fixing element;
when the first fixing element is moved to the non-fixed position from the fixed position, the second fixing element would be moved to the opening position from the closed position by the connection element, so that the lens is not covered;
when the first fixing element is moved to the fixed position from the non-fixed position, the second fixing element would be moved to the closed position from the opening position by the connection element, so that the lens is covered.

14. The electronic communication device according to claim 13, further comprising:
an elastomer whose two ends are correspondingly connected to the first fixing element and a fixed point to be disposed within the scene shooting portion to provide an elastic force when the first fixing element is at the fixed position and the non-fixed position respectively, so that the first fixing element is moveable only when receiving an external force larger than the elastic force.

15. A linking device, comprising:
a first fixing element and a second fixing element; and
a connection element, which is pivotally connected to the first fixing element and the second fixing element and swings along a pivotal point according to the movement of the first fixing element or the movement of the second fixing element to drive the second fixing element or the first fixing element to move; and
an elastomer whose one end is for connecting the first fixing element and another end is for connecting a fixed point, wherein the elastomer is for providing an elastic force, so that the first fixing element or the second fixing element is moveable only when receiving an external force larger than the elastic force.

16. The linking device according to claim 15, wherein the moving direction of the first fixing element and the moving direction of the second fixing element form a contained angle.

17. The linking device according to claim 16, wherein the contained angle is 90°.

18. The linking device according to claim 15, wherein the connection element is an elbow structure, the bending of the elbow structure is pivotally connected to the pivotal point.

19. The linking device according to claim 15, wherein the elastomer is a torsional spring.

20. The linking device according to claim 15, further comprising:
a positioning element for providing the pivotal point and the fixed point.
